# EUROPEAN PATENT SPECIFICATION

(11) **EP 2 737 295 B1**
(45) Date of publication and mention of the grant of the patent: **09.09.2015**
(21) Application number: 12766339.1
(22) Date of filing: 27.07.2012
(51) Int. Cl.: G01N 1/28, G01N 15/08, G01N 29/04

(54) **EVALUATION OF POROSITY IN ALUMINUM INGOT**
BESTIMMUNG DER POROSITÄT EINES ALUMINIUMBLOCKS
EVALUATION DE POROSITÉ DANS UN LINGOT D'ALUMINIUM

(30) Priority: 29.07.2011 US 201161513388 P
(43) Date of publication of application: 04.06.2014
(73) Proprietor: Alcoa Inc., Pittsburgh, PA 15212-5858 (US)
(72) Inventor: LI, Fan, Carlsbad, CA 92002 (US); ROGERS, William, Lake Barrington, IL 60010 (US); BUSTA, James, Parma, OH 44129 (US); CHILKO, Michael, New Kensington, PA 15068 (US); SCHAPER, Gary, Pittsburgh, PA 15236 (US)
(74) Representative: Trinks, Ole
(86) International application number: PCT/US2012/048607
(87) International publication number: WO 2013/019641

(56) References cited:
- US-A- 5 483 819
- US-A- 5 633 453
- US-A1- 2002 173 040
- US-A1- 2009 133 501
- US-A1- 2009 277 269
- PRABHU ARUMUGAM ET AL: "dry machining of aluminum-silicon alloy using polished CVD diamond-coated cutting tools inserts", SURFACE AND COATINGS TECHNOLOGY, vol. 200, 31 December 2006 (2006-12-31), pages 3399-3403, XP002686177,

## Description

### BACKGROUND

### 1. Related Applications

This application claims the benefit, and priority benefit, of U.S. Provisional Patent Application Serial No. 61/513,388, filed July 29, 2011, titled "Evaluation of Porosity in Aluminum Ingot,".

### 2. Field of Invention

The present subject matter relates generally to methods for evaluating porosity in aluminum ingot, and in particular, to methods for evaluating porosity using focused beam ultrasonic testing and/or florescent dye penetrant testing.

### 3. Description of Related Art

Methods of evaluating porosity of aluminum ingot are known in the art. Improved evaluation techniques are desired that can detect fine level porosities in micrometer size ranges with better resolution and higher consistency.

### BRIEF SUMMARY

Various illustrative embodiments of methods for evaluating porosity in aluminum ingot are disclosed herein. In an illustrative embodiment, porosity of aluminum ingot can be evaluated using focused beam ultrasonic testing (UT). In another illustrative embodiment, porosity of aluminum ingot can be evaluated using florescent dye penetrant testing (PT). US 2009/0133501 and US 2002/0173040 shows example, of methods for evaluating porosity of aluminum.

In certain illustrative embodiments, the aluminum ingot can be machine cut to form an aluminum ingot slice prior to testing. The machine cut can be performed using a polycrystalline cutting material in a "fly cutter" configuration. In certain illustrative embodiments, the polycrystalline cutting material can comprise a diamond material. In certain illustrative embodiments, the insert can cut an aluminum ingot slice to a surface roughness finish in the range of about 7-9 micro inches.

In certain illustrative embodiments, porosity of aluminum ingot machined using a polycrystalline diamond cutting material as a fly cutter can be evaluated using both focused beam ultrasonic testing and florescent dye penetrant testing, whereby the results of the ultrasonic testing and the florescent dye penetrant testing are compared to each other. The results of the aforementioned ultrasonic testing and the florescent dye penetrant testing can also be compared to test results obtained by other sample preparation methods such as carbide cutter machining for ultrasonic testing and caustic etching for fluorescent dye penetrant testing.

Fine levels of porosity of micrometer sizes in the aluminum ingot can be revealed and quantified using the evaluation methods disclosed herein. In certain illustrative embodiments, the evaluation methods can detect fine level porosities of approximately one micrometer or larger. Diamond machining of the ingot can result in higher resolution and consistency for both focused beam ultrasonic testing and florescent dye penetrant testing than in other testing methods. The proposed methods disclosed herein are also environmentally friendly as they can eliminate the potentially hazardous chemical etching process for florescent dye penetrant testing inspection.

In an illustrative embodiment, a method of evaluating porosity of an aluminum ingot sample comprises: cutting the aluminum ingot sample to form an aluminum ingot slice, whereby the cutting is performed using a polycrystalline diamond cutting insert as a fly cutter to produce an aluminum ingot slice; and subjecting the aluminum ingot slice to focused beam ultrasonic testing. The slice can have a surface roughness finish in the range of about 7-9 micro inches. Alternatively, the slice can have a surface roughness finish in the range of about 5 micro inches. The cutting can also be performed using a single crystalline diamond cutting insert. The cutting can be performed at a machining speed of above 10,000 RPM to produce a finer finish. The aluminum ingot slice can be hardened to T6 temper to reduce the base metal gumminess.

In an illustrative embodiment, a method of evaluating porosity of an aluminum ingot sample comprises: cutting the aluminum ingot sample to form an aluminum ingot slice, whereby the cutting is performed using a polycrystalline diamond cutting insert as a fly cutter to produce an aluminum ingot slice; and subjecting the aluminum ingot slice to florescent dye penetrant testing. The slice can have a surface roughness finish in the range of about 7-9 micro inches. Alternatively, the slice can have a surface roughness finish in the range of about 5 micro inches. The cutting can also be performed using a single crystalline diamond cutting insert. The cutting can also be performed using a single crystalline diamond cutting insert. The cutting can be performed at a machining speed of above 10,000 RPM to produce a finer finish. The aluminum ingot slice can be hardened to T6 temper to reduce the base metal gumminess.

### BRIEF DESCRIPTION OF THE DRAWINGS

The disclosed subject matter may be understood by reference to the following description taken in conjunction with the accompanying drawings, in which:
FIG. 1 is a perspective view of an aluminum ingot slice prepared using a diamond cutting tip according to certain illustrative embodiments.
FIG. 2(a) is a c-scan image of a 7050 ingot slice prepared by milling using a carbide cutter.
FIG. 2(b) is a c-scan image of a 7050 ingot slice machined by a diamond cutting tip according to certain illustrative embodiments.
FIG. 3(a) is a c-scan image of a 2014 ingot slice prepared by milling using a carbide cutter.
FIG. 3(b) is a c-scan image of a 2014 ingot slice machined by a diamond cutting tip according to certain illustrative embodiments.
FIG. 4(a) is a photographic image under black light of a 7050 ingot slice prepared by milling using a carbide cutter and then etched in caustic solution.
FIG. 4(b) is a photographic image under black light of a 7050 ingot slice machined by a diamond cutting tip without caustic etching according to certain illustrative embodiments.
FIG. 5(a) is photographic image under black light of a 2014 ingot slice prepared by milling using a carbide cutter and then etched in caustic solution.
FIG. 5(b) is photographic image under black light of a 2014 ingot slice machined by a diamond cutting tip without caustic etching according to certain illustrative embodiments.
FIG. 6 is a c-scan image of a metal surface machined using a carbide cutter.

While certain specific embodiments of methods for evaluating porosity in aluminum ingot will be disclosed, it will be understood that it is not intended to limit the inventions to those embodiments. On the contrary, it is intended to cover all alternatives, modifications, and equivalents, as may be included within the scope of the inventions as to be defined by the claims herein.

### DETAILED DESCRIPTION

In accordance with the illustrative embodiments disclosed herein, methods for evaluating porosity in aluminum ingot are provided. The porosity of the aluminum ingot can be evaluated using focused beam ultrasonic testing (UT) and/or florescent dye penetrant testing (PT).

### Focused Beam Ultrasonic Testing.

In certain illustrative embodiments, focused beam ultrasonic testing (UT) can be utilized. This ultrasonic testing can generally involve converging or focusing an ultrasonic beam on a focal point on an ingot sample. Data gates can be used to define a selected region of defined area/depth on the ingot sample around the focal point from which data can be collected. A c-scan image of the selected region can be produced. The c-scan image displays a 2-dimensional projection of "clusters", or groups of indications, which generally represent the porosity of the ingot sample. The size and distribution of the "clusters" can be determined by factors such as transducer frequency, sound beam width and scanning index for the equipment producing the ultrasonic beam. The c-scan image can also display other features present in the ingot sample besides porosity, such as solid inclusions, second phase particles, and grain boundaries, although the effect from these other features is comparatively negligible when evaluating porosity. The findings on the c-scan image can be measured and quantified. Numerical grading can be applied to a color bar code corresponding to the c-scan image with generally high precision. To be meaningful in such quantifiable measurements, all testing and scanning parameters should preferably be fixed and standardized, especially the color codes and full screen height values.

### Florescent Dye Penetrant Testing.

In certain illustrative embodiments, fluorescent dye penetrant testing (PT) can be utilized. Penetrant testing is based upon capillary action, where low surface tension fluid penetrates into the porous areas of the sample. After adequate dwell time has been allowed, the excess penetrant is removed and a developer is applied. The developer helps to draw penetrant out of the porous area such that a visible indication becomes apparent to an inspector. Inspection can be performed under black light. An image analyzer software package can be utilized to quantify the results based on the images. Multiple process variations could affect the final results, such as lighting conditions, the threshed settings in the image analyzer, the penetrant dwell time, development time, washing or emulsification conditions, etc...

### Preparation of aluminum ingot slices.

In certain illustrative embodiments, one or more slices of aluminum ingot can be machined for use in UT and PT testing. In one aspect, the slices can be prepared using a polycrystalline diamond cutting tip bonded to a carbide insert. The cutting tip disclosed herein can be utilized on a variety of types of milling machines. The cutting tip can be utilized as a fly cutter on a conventional milling machine with a regular mill head and normal operating parameters. This particular set up does not require any substantial modification to a traditional milling machine. Other means for cutting the aluminum ingot with a diamond cutting material can also be utilized in connection with the presently disclosed embodiments.

In an illustrative embodiment, rough slicing of an aluminum ingot sample can be performed using a 6" diameter. Two carbide inserts spaced approximately 180 degrees apart can be utilized. Both inserts can be uncoated carbide, razor sharp. The insert/face mill can have a high positive geometry with an approximately 0.031" radius on the cutting tips. A finishing cut can be performed using a 5" diameter face mill. A single polycrystalline diamond insert cutting tip can be used for the finishing cut. This insert is medium high positive, also with an approximately 0.031" radius on the cutting tip. The cutting tip will preferably have a positive cutting angle to "pull" the tip away from the surface of the ingot sample and avoid smearing the ingot sample, which produces a fine finish. Further, a larger radius on the cutting tip can be advantageous for quicker feed rate and better finish. Maintaining the sharpness of the cutting tip is considered to be important in avoiding potential smearing of the surface of the ingot sample.

After diamond machining, the surface roughness finish of the ingot slice can be in the range of approximately 7-9 micro-inches on a portable digital roughness tester. An even finer surface roughness finish of approximately 5 micro-inches can also be obtained. This finer surface finish can be achieved in one or a combination of variety of ways. For example, a single-crystal diamond cutting tip can be utilized, which is harder and can provide a finer finish. Also, a higher machining speed of above 10,000 RPM could result in a finer finish, which would require specialized CNC machines or modifications to traditional milling machines. Further, hardening the ingot to T6 temper could reduce the base metal gumminess. T6 heat treating could require separate processing of the ingot and may add additional time and cost to the process.

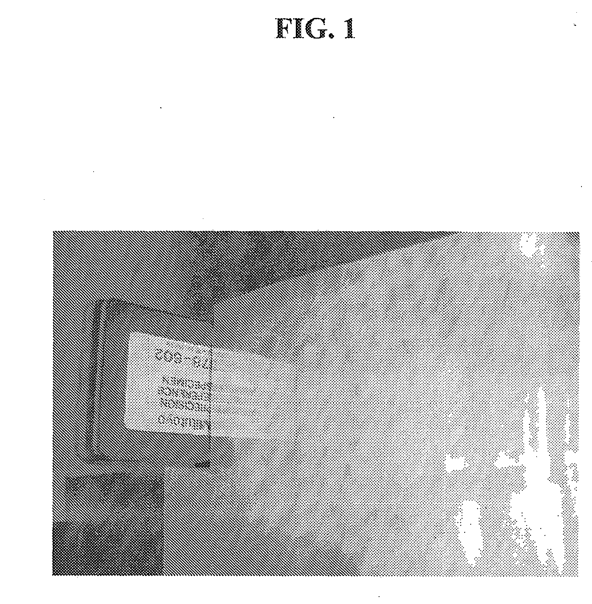

The surface appearance of an aluminum ingot slice prepared using a diamond cutting tip according to certain illustrative embodiments is illustrated in FIG. 1. The surface of the slice is highly reflective and approaches a "mirror" finish. There are very small burrs of the size less than 0.2 mm at the edges of the slice. The appearance of these burrs indicates a small amount of gumminess and plastic deformation on the aluminum surface as the diamond cutting tip cuts through. However, these burrs are very small compared to those that would be produced by a carbide cutter which can be up to 1-2 mm range.

### UT Testing and Results.

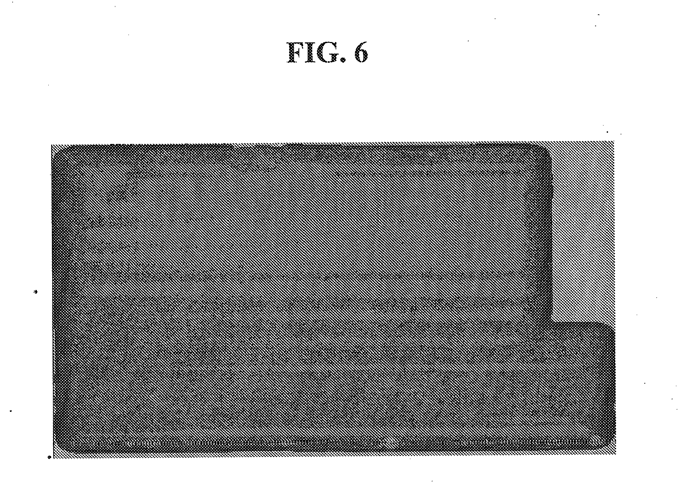

In certain illustrative embodiments, focused beam ultrasonic testing (UT) is believed to be sensitive to ingot surface finish. Machining a metal surface using a traditional carbide cutter at normal speed and feed rate often results in grooves visible to human eyes that deflect the ultrasonic beam and detract from the c-scan image, as illustrated in FIG. 6. Additional grinding and polishing using sandpaper is often required to achieve acceptable c-scan imaging, especially at fine porosity levels. A desirable fine surface finish can be difficult to judge through the grinding and polishing method.

Experiments were performed to evaluate porosity of diamond machined aluminum ingot slices using focused beam ultrasonic testing (UT). A c-scan image was generated with four encoded axis (X, Y, Z and rotation). Samples of 7050 and 2014 ingot slices machined with a diamond cutting tip were tested using focused beam ultrasonic testing (UT). These slices represented a wide range of porosity density changes.

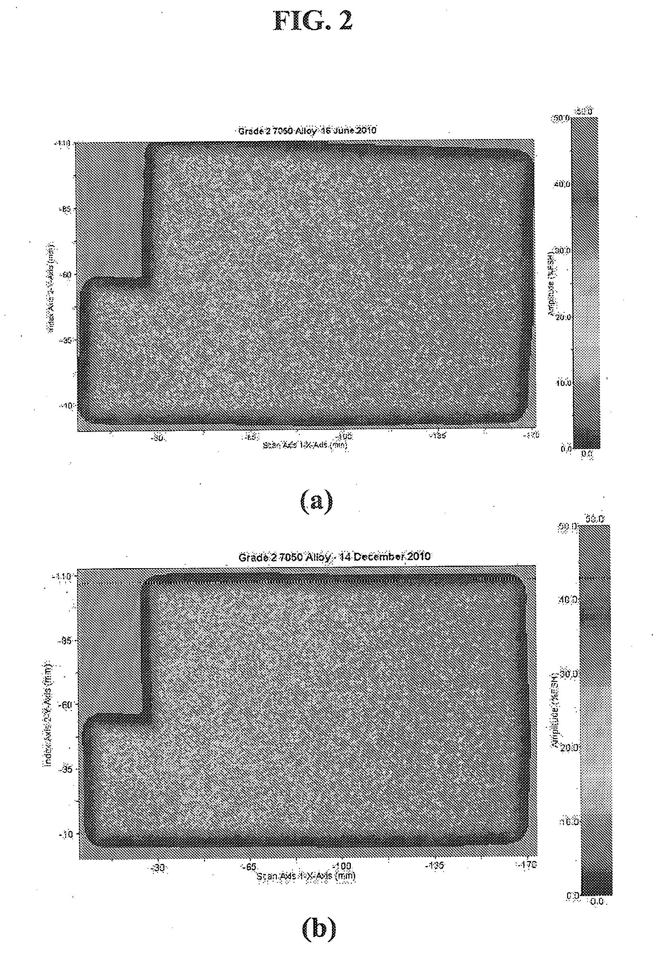

The UT results comparison for the 7050 ingot slice (using c-scans at 128 colors, 50 % FSH values) is shown in FIGS. 2(a) and 2(b). FIG. 2(a) shows a c-scan image of a sample prepared by milling using carbide cutters and then sanding manually with paper. FIG. 2(b) shows a c-scan image of a sample machined by diamond cutting tip. The image in FIG. 2(b) reveals more surface features and higher intensity than the image in FIG. 2(a), as indicated by the increased frequency of yellow and green areas on the image. The color change upwards on the color bar suggests an increase in indication intensity of the ingot porosity observed by the focused ultrasonic beam. The image from diamond machining also displays better resolution, likely due to fewer deflections of the ultrasonic beam from the sample surface due to the more uniform and finer surface finish.

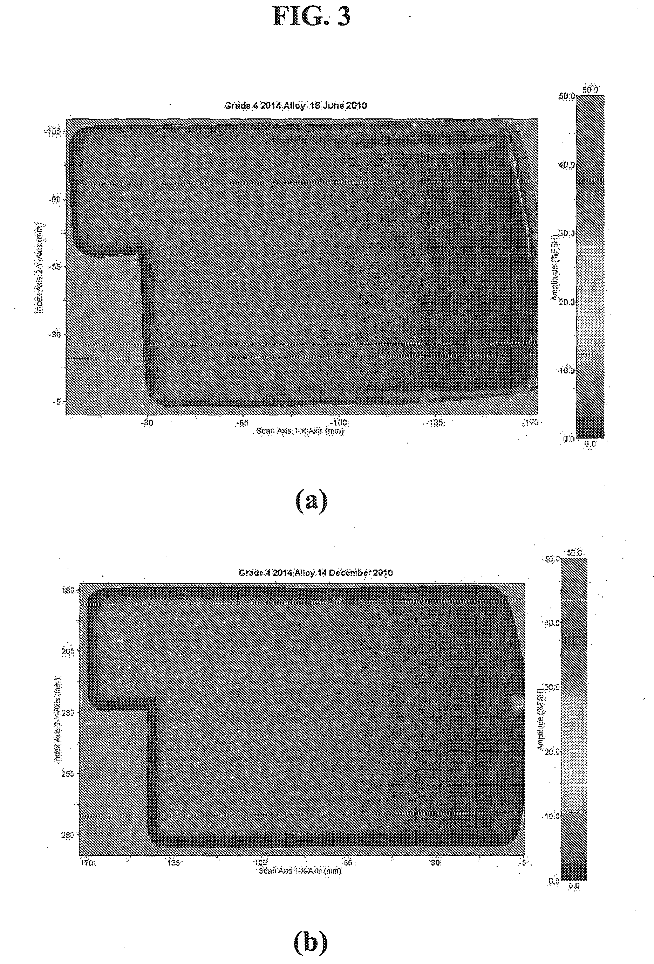

The UT results comparison for the 2014 ingot slice (using c-scans at 128 colors, 50 % FSH values) is shown in FIGS. 3(a) and 3(b). FIG. 3(a) shows a c-scan image of a sample prepared by milling using carbide cutters and then sanding manually with paper. FIG. 3(b) shows a c-scan image of a sample machined by diamond cutting tip. The image of FIG. 3(b) displays higher density than that shown in the image of FIG. 3(a), and the indications shown on the image of FIG. 3(b) have stronger echo or sound intensity than those in the image of FIG. 3(a).

The ingot sample shown in FIG. 3 contained less porosity than the sample shown in FIG. 2. The porosity density was also different in the two samples. Towards the edge of the round ingot of FIG. 3 (the right side on the picture) there was little or no detectable porosity. The density gradually increased towards the center of the ingot (the left side of the picture). This gradual change in porosity distribution demonstrated the sensitivity of the UT method according to the present illustrative embodiments in picking up very faint indications of micro-meters range towards the sample edge. The image of FIG. 3(a) also showed darker and brighter (yellow) ring patterns around the edges of the sample. This feature was due to the rougher surface of the conventional carbide cutter machining, and was eliminated in the image of FIG. 3(b).

The above observations suggest that the c-scan images obtained from diamond cutter machined samples according to the present illustrative embodiments had better resolution than those from carbide cutters, and that the sensitivity increase appeared to be more profound at lower porosity levels.

### PT Testing and Results.

Experiments were performed to evaluate porosity of diamond machined aluminum ingot slices using fluorescent dye penetrant testing (PT). The same samples used for UT evaluation described in the previous section were dried and used for PT testing. The diamond cutter machined surfaces were protected throughout the processes to prevent any handling damage.

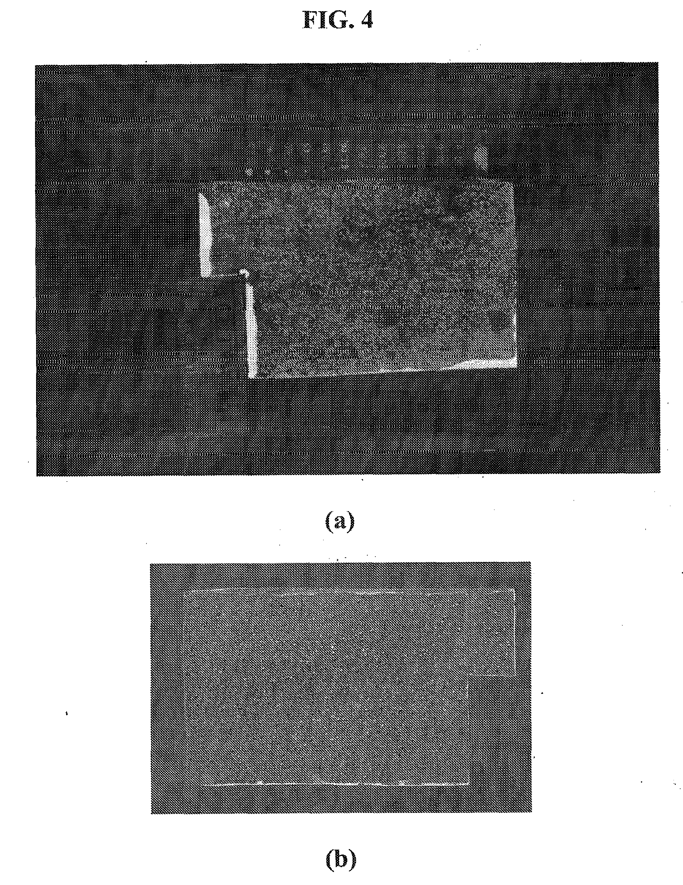

The PT results comparison for the 7050 ingot slice are shown in FIGS. 4(a) and 4(b). FIG. 4(a) shows a photographic image under fluorescent light of a sample prepared by milling using carbide cutters then etched in caustic solution. FIG. 4(b) shows a photographic image under black light of the same sample machined by diamond cutting tip without caustic etching.

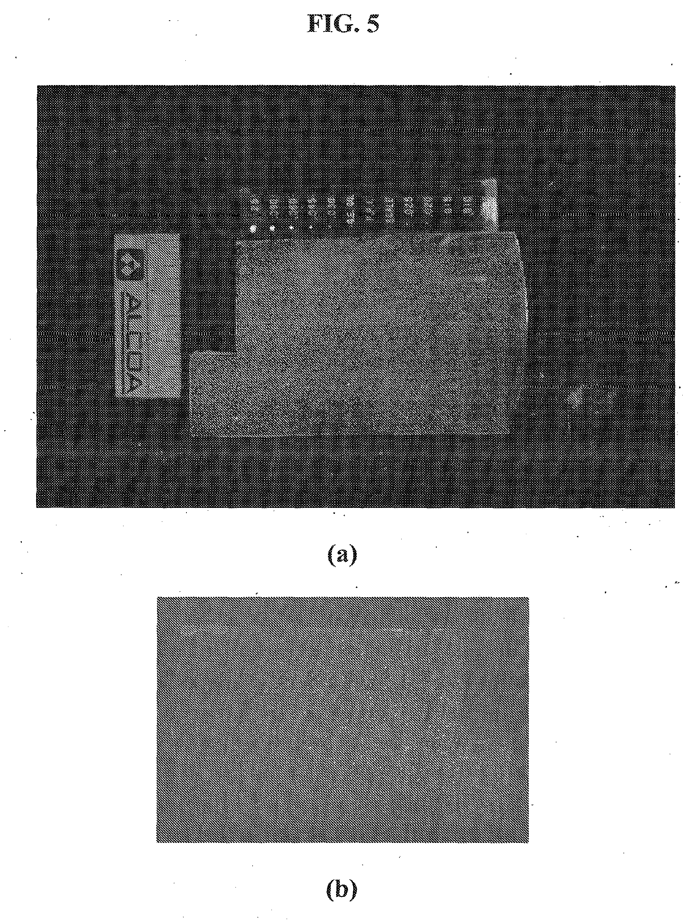

The PT results comparison for the 2014 ingot slice are shown in FIGS. 5(a) and 5(b). FIG. 5(a) shows a photographic image under black light of a sample prepared by milling using carbide cutters then etched in caustic solution. FIG. 5(b) shows a photographic image under fluorescent light of the same sample machined by diamond cutting tip without caustic etching.

For the samples of FIGS. 4(a) and 5(a), the sample preparation was done by carbide cutter machining and then etching in caustic solutions. Etching time for effective removal of the surface machining grooves varied drastically for the two alloys. The final surface finish roughness was not measured; a visual inspection on a stereo microscope was performed to accept the etching conditions. The PT was a Type I Method A (water washable) with a sensitivity level of 3. An aqueous spray developer was used.

For the samples of FIGS. 4(b) and 5(b), commercial florescent dye penetrant was used to evaluate the diamond cutting machined samples. The dye was a Type I Method D (post emulsified hydrophilic emulsification) line with a sensitivity level of 2. The line uses a wet developer which results in a very visible whitish coating on the samples when viewed under ambient lighting. Photographs were taken within one hour after the penetrant development.

Within 1-2 grades, the samples appeared to show similar pore density, size and distribution. The etched samples in FIGS. 4(a) and 5(a) appear to have increased surface smear and some surface contamination. It is likely due to excessive handling, manual measurement of the porosity density and the delay time prior to photographing the samples. The diamond cutter machined sample images appear to be "cleaner", although they were processed on a commercial production line with some loss in sensitivity.

Sample preparation with the diamond cutter and a less sensitive penetrant as shown in FIGS. 4(b) and 5(b) appeared to be equally sensitive to porosity detection as conventionally machined and etched samples from FIGS. 4(a) and 4(b). The diamond cutter machining did not smear or cover up the pores in the ingot slices that had visually observable sizes and density distribution. The caustic etched sample with higher sensitive dye had no advantage over the diamond machined sample with reduced sensitivity dye. The close similarity of results between the two different sample preparation methods indicates that the diamond cutter machining preparation would promise comparable results to that from etching without the additional variables and potential hazards introduced by etching.

### Evaluation of Test Results

The UT and PT methods showed relative consistency in results among ingot samples that had different levels of porosity. These two methods also validated and corresponded to each other well in terms of their images. Very fine sub-micro meter pore size and distribution can be detected, in certain illustrative embodiments. In certain illustrative embodiments, the evaluation methods can detect fine level porosities of approximately one micrometer or larger. Further, the polycrystalline diamond fly cutter machining finish provided a significant advantage over carbide cutter machining and etching in caustic solutions for porosity evaluation. For the UT method, the polycrystalline diamond fly cutting surface finish was more consistent and could significantly reduce or eliminate focused beam deflection and edge effect due to rougher and uneven surfaces from carbide cutter machining and sand paper polishing. For the PT method, the polycrystalline diamond fly cutting finish resulted in more consistent and reliable results. The diamond fly cutter machining method eliminated or substantially reduced process variables associated to chemical etching, such as alloy composition dependency, solution concentration, temperature, etch time and rinse. Further, it eliminated the usage of large scale hazardous chemical processing. The machining method was also more productive and less costly. The machining could be done on a traditional mill within the designed speed maximum range without modification.

Focused beam ultrasonic testing (UT) and fluorescent dye penetrant testing (PT) are both recommended for field applications, together with the diamond fly cutter machining of ingot samples as disclosed in the illustrative embodiments herein. Both testing methods can be utilized to validate each other. The results of the UT method are more easily quantifiable with little process variation, and thus UT is recommended as the primary method. The PT method can serve as a secondary validation when necessary. The quantifiable nature of the measurements can be expressed by the percentage values in the c-scan color bar. The computer analyzer is capable of providing a numerical number at any coloration level. A color and numerical standard can be established to grade these levels.

It is to be understood that the subject matter herein is not limited to the exact details of construction, operation, exact materials, or illustrative embodiments shown and described, as modifications and equivalents will be apparent to one skilled in the art. Accordingly, the subject matter is therefore to be limited only by the scope of the appended claims.

## Claims

1. A method of evaluating porosity of an aluminum ingot sample comprising the steps of:
- cutting the aluminum ingot sample to form an aluminum ingot slice, whereby the cutting is performed using a diamond cutting insert as a fly cutter to produce an aluminum ingot slice; and
- subjecting the aluminum ingot slice to focused beam ultrasonic testing and/or to fluorescent dye penetrant testing.

2. The method of claim 1, wherein the ingot slice has a surface roughness finish in the range of about 177.8 µm to 228.6 µm (= 7 to 9 micro inches).

3. The method of claim 1 or 2, wherein the ingot slice has a surface roughness finish in the range of about 127.0 µm (= 5 micro inches).

4. The method of one of the claims 1 to 3, further comprising the step of performing the cutting at a machining speed of above 10,000 RPM.

5. The method of one of the claims 1 to 4, further comprising the step of hardening the aluminum ingot slice to T6 temper.

6. The method of one of the claims 1 to 5, wherein the insert is a single crystalline diamond cutting insert.

7. The method of one of the claims 1 to 5, wherein the insert is a polycrystalline diamond cutting insert.

8. The method of one of the claims 1 to 7, wherein the aluminum ingot slice is subjected to both fluorescent dye penetrant testing and focused beam ultrasonic testing, and wherein the method comprises the further step of:
- comparing the results of the fluorescent dye penetrant testing and focused beam ultrasonic testing.

## Patentansprüche

1. Verfahren zum Bewerten der Porosität einer Aluminiumblockprobe, wobei das Verfahren folgende Schritte aufweist:
- Schneiden der Aluminiumblockprobe, um einen Aluminiumblockstreifen zu bilden, wobei das Schneiden unter Verwendung eines Diamant-Schneideinsatzes als Schlagmesser durchgeführt wird, um einen Aluminiumblockstreifen herzustellen; und
- Unterziehen des Aluminiumblockstreifens einer Feinstrahl-Ultraschallprüfung und/oder einer Fluoreszenz-Eindringprüfung.

2. Verfahren nach Anspruch 1, wobei der Blockstreifen eine Oberflächenrauigkeit im Bereich von etwa 117, 8 µm bis 228, 6 µm (= 7 bis 9 micro inches) aufweist.

3. Verfahren nach Anspruch 1 oder 2, wobei der Blockstreifen eine Oberflächenrauigkeit im Bereich von etwa 127 µm (= 5 micro inches) aufweist.

4. Verfahren nach einem der Ansprüche 1 bis 3, welches ferner den Schritt des Verrichtens des Schneidens bei einer Bearbeitungsgeschwindigkeit von etwa 10.000 U/Min. aufweist.

5. Verfahren nach einem der Ansprüche 1 bis 4, welches ferner den Schritt des Härtens des Aluminiumblockstreifens zu einem Härtegrad von T6 aufweist.

6. Verfahren nach einem der Ansprüche 1 bis 5, wobei der Schneideinsatz ein monokristalliner Diamant-Schneideinsatz ist.

7. Verfahren nach einem der Ansprüche 1 bis 5, wobei der Schneideinsatz ein polykristalliner Diamant-Schneideinsatz ist.

8. Verfahren nach einem der Ansprüche 1 bis 7, wobei der Aluminiumblockstreifen sowohl einer Feinstrahl-Ultraschallprüfung als auch einer Fluoreszenz-Eindringprüfung unterzogen wird, und wobei das Verfahren ferner folgenden Schritt aufweist:
- Vergleichen der Ergebnisse der Fluoreszenz-Eindringprüfung und der Feinstrahl-Ultraschallprüfung.

## Revendications

1. Procédé pour évaluer la porosité d'un échantillon de lingot d'aluminium, comprenant les étapes consistant à:
- couper l'échantillon de lingot d'aluminium pour former une tranche de lingot d'aluminium, de sorte que la coupe est exécutée en utilisant un insert de coupe en diamant à titre de couteau à la volée pour produire une tranche de lingot d'aluminium; et
- soumettre la tranche de lingot d'aluminium à des tests par ultrasons en faisceau focalisé et/ou à des tests de pénétration de teinture fluorescente.

2. Procédé selon la revendication 1, dans lequel la tranche de lingot a une finition de rugosité de surface dans la plage d'environ 177,8 µm à 228,6 µm (= 7 à 9 micro-pouces).

3. Procédé selon la revendication 1 ou 2, dans lequel la tranche de lingot a une finition de rugosité de surface dans la plage d'environ 127,0 µm (5 micro-pouces).

4. Procédé selon l'une des revendications 1 à 3, comprenant en outre l'étape consistant à exécuter la coupe à une vitesse d'usinage au-dessus de 10 000 tr/m.

5. Procédé selon l'une des revendications 1 à 4, comprenant en outre l'étape consistant à faire durcir la tranche de lingot d'aluminium jusqu'à une températion de type T6.

6. Procédé selon l'une des revendications 1 à 5, dans lequel l'insert est un insert de coupe en diamant monocristallin.

7. Procédé selon l'une des revendications 1 à 5, dans lequel l'insert est un insert de coupe en diamant polycristallin.

8. Procédé selon l'une des revendications 1 à 7, dans lequel la tranche de lingot d'aluminium est soumise à la fois à des tests de pénétration de teinture fluorescente et à des tests par ultrasons en faisceau focalisé, et dans lequel le procédé comprend en outre l'étape consistant à:
- comparer les résultats des tests de pénétration de teinture fluorescente et des tests par ultrasons en faisceau focalisé.
